Europäisches Patentamt

European Patent Office

Office européen des brevets

(11) Numéro de publication: **0 290 698**
**B1**

(12) **FASCICULE DE BREVET EUROPEEN**

(45) Date de publication du fascicule du brevet:
**25.04.90**

(21) Numéro de dépôt: **87401064.8**

(22) Date de dépôt: **12.05.87**

(51) Int. Cl.⁴: **B62D 5/083**

(54) **Dispositif élastique de centrage et d'accouplement à course morte de deux organes rotatifs.**

(43) Date de publication de la demande:
**17.11.88 Bulletin 88/46**

(45) Mention de la délivrance du brevet:
**25.04.90 Bulletin 90/17**

(84) Etats contractants désignés:
**DE FR GB IT**

(56) Documents cités:
**EP-A- 0 077 710**

(73) Titulaire: **BENDIX ESPANA S.A.,
Balmès 243 Apartado 9556, E-08080 Barcelona 6(ES)**

(72) Inventeur: **Bacardit, Juan Simon, Calle
Mallorca 451 sexto piso 4aA, Barcelona 13(ES)**

(74) Mandataire: **Timoney, Ian Charles Craig et al, BENDIX
FRANCE Division Technique Service Brevets Bendix
Europe 126, rue de Stalingrad, F-93700 Drancy(FR)**

ACTORUM AG

# Description

La présente invention concerne les dispositifs élastiques de centrage et d'accouplement à course morte d'un premier et d'un second organes rotatifs coaxiaux, le second organe rotatif ayant une partie entourant une partie du premier organe, du type comprenant au moins un ressort en C disposé sensiblement coaxialement entre lesdites parties des premier et second organes rotatifs et comportant deux zones d'extrémités adjacentes sensiblement symétriques par rapport à un plan médian et reliées l'une à l'autre par une partie de corps partiellement annulaire, chaque zone d'extrémité comportant une première et une seconde arêtes de butée coopérant normalement, en position centrée des premier et second organes rotatifs, chacune en butée respectivement avec une première et une seconde surfaces de butée solidaires respectivement desdites parties des premier et second organes rotatifs, les première arêtes de butée étant formées par des pattes d'extrémités s'étendant sensiblement radialement vers l'intérieur et reçues dans une cavité externe de ladite partie du premier organe rotatif dont les faces en regard forment les premières surfaces de butée.

Un dispositif élastique de centrage et d'accouplement à course morte de ce type comportant les caractéristiques définies dans le préambule de la revendication 1 est décrit dans le document EP-A-0 077 710 au nom de la demanderesse, notamment en relation avec la figure 10 de ce document. Dans cet agencement de ce document, les seconde arêtes de butée sont formées par des pattes s'étendant radialement vers l'extérieur des zones d'extrémité du ressort en C et reçues dans une ouverture radiale de la partie du second organe rotatif entourant le premier organe rotatif, les premières et secondes surfaces de butée étant sensiblement coplanaires deux à deux et espacées radialement l'une de l'autre d'une distance relativement importante, dans un agencement induisant, en fonctionnement, des risques de déplacement, et notamment de vrillage, du ressort en C sous l'effet des couples résultant des forces d'action et de réaction décalées entre les pattes externes et internes des zones d'extrémité du ressort en C.

La présente invention a pour objet de proposer des perfectionnements aux dispositifs élastiques de centrage et d'accouplement à course morte du type considéré, minimisant les effets indésirables susmentionnés, assurant un centrage et un positionnement corrects du ressort en C et permettant d'exploiter au mieux les caractéristiques fonctionnelles du ressort en C, dans un agencement compact et robuste et de faibles coûts de fabrication.

Pour ce faire, selon l'invention, chaque seconde arête de butée du ressort en C étant formée par un épaulement externe au niveau du raccordement entre la zone d'extrémité correspondante et la partie de corps du ressort, l'épaulement étant décalé angulairement de la première arête de butée correspondante de la même zone d'extrémité du ressort en C, les secondes surfaces de butée sont formées en vis à vis dans la paroi intérieure de ladite partie du second organe rotatif entourant le premier organe rotatif et en position centrée des premier et second organes rotatifs, les première et seconde surfaces de butée de chaque zone d'extrémité du ressort en C sont sensiblement contiguës en projection sur le plan médian.

D'autres caractéristiques et avantages de la présente invention ressortiront de la description suivante d'un mode de réalisation, donné à titre illustratif mais nullement limitatif, faite en relation avec les dessins annexés, sur lesquels:

— la figure 1 est une vue partiellement en coupe longitudinale d'un distributeur hydraulique rotatif mettant en œuvre un dispositif élastique de centrage et d'accouplement à course morte selon l'invention; et
— la figure 2 est une vue en coupe transversale suivant le plan de coupe II–II de la figure 1.

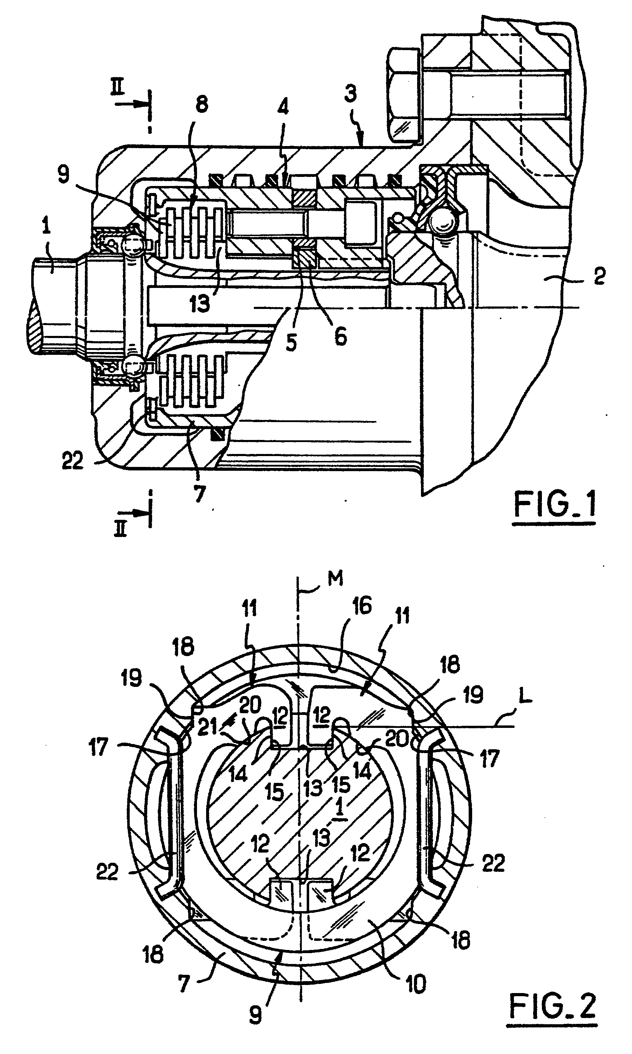

On reconnaît sur la figure 1 un distributeur hydraulique rotatif, plus particulièrement pour servo-direction de véhicule, du type décrit dans le document EP-A-0 095 415, au nom de la demanderesse, et comprenant un arbre d'entrée 1, destiné à être couplé à un volant de direction, et un arbre de sortie coaxial 2, destiné à actionner une crémaillère, les deux arbres 1 et 2 étant supportés à rotation coaxialement dans un boîtier de direction 3 dans lequel est monté à rotation un ensemble de stator de valve de distribution, désigné généralement par la référence 4, couplé en rotation à l'arbre de sortie 2, et ménageant une cavité discoïde interne 5 dans laquelle est disposé un rotor de valve de distribution en étoile 6 couplé en rotation à l'arbre d'entrée 1. Entre l'arbre d'entrée 1 et une partie de prolongement axial 7 de l'ensemble de stator de valve 4 est aménagé un dispositif élastique de centrage et d'accouplement à course morte 8 selon l'invention, constitué par une série de ressorts en C 9 axialement juxtaposés et placés alternativement en opposition, ces ressorts en C 9 assurant ainsi le centrage en position de repos des arbres d'entrée 1 et de sortie 2 (et, partant, des éléments de distributeurs 5 et 4), en créant en outre, lors d'un déplacement relatif limité en rotation de l'arbre 1 par rapport à l'arbre 2, tout d'abord une réaction sur l'arbre 1 s'opposant à ce déplacement en rotation puis, au delà d'un déplacement angulaire déterminé, un accouplement en rotation entre les deux arbres 1 et 2 par venue en appui mutuel des zones d'extrémités des ressorts.

Comme on le voit bien sur la figure 2, chaque ressort en C 9 comprend une partie de corps en forme de secteur annulaire 10 prolongée par deux zones d'extrémité adjacentes 11, séparées l'une de l'autre, sensiblement symétriques par rapport à un plan médian M. Chaque zone d'extrémité 11 se termine par une patte s'étendant sensiblement radialement vers l'intérieur 12 et reçue dans une rainure longitudinale 13 formée dans l'arbre 1 (ou dans une pièce rendue solidaire de ce dernier). Les pattes 12 sont montées sous pré-contrainte dans la gorge 13 avec leurs arêtes en opposition 14 en engagement élastique avec les faces latérales parallèles en regard 15 de la rainure 13 symétriques par rapport au plan médian M dans la position de repos représentée.

La paroi intérieure 16 de la partie de prolongement 7 présente un profil généralement circulaire mais comporte au moins une paire, typiquement deux paires de zones décalées radialement vers l'intérieur formant des portions de surfaces cylindriques 17, de rayon légèrement supérieur au rayon extérieur de la zone adjacente de la partie de corps 10 du ressort 9, au niveau de sa jonction avec la zone d'extrémité correspondante 11, et se terminant chacune, d'un côté, par un épaulement 18 parallèle, dans la position centrée de repos des organes rotatifs 1 et 7, au plan médian M et donc, aux faces 15 de la rainure 13 . Pour le montage symétrique de plusieurs ressorts en C alternés, les épaulements 18 sont constitués par des lamages longitudinaux plans brochés dans la paroi intérieure 16.

Chaque zone d'extrémité 11 du ressort 9 forme extérieurement, au niveau de son raccordement extérieur avec la portion adjacente de la partie de corps 10, un épaulement externe 19 venant porter en appui contre l'épaulement 18 sus-mentionné dans la paroi intérieure 16 du second organe rotatif 7, et présente intérieurement une portion s'étendant radialement vers l'intérieur définissant une surface interne cylindrique 20 de rayon très légèrement supérieur au rayon de la surface externe adjacente 21, voisine de la gorge 13, de l'arbre 1 (ou de la pièce dans laquelle est formée la rainure 13). Avec un tel agencement, comme on le voit bien sur la figure 2, le ressort en C 9 est parfaitement centré et positionné entre les deux organes rotatifs 1 et 7 avec, dans la position centrée de repos représentée, les arêtes 14 en contact d'engagement avec les faces 15 de la rainure 13 et les épaulements externes en contact d'engagement avec les épaulements 18 de la paroi intérieure 16 du second organe rotatif 7. Selon un aspect de l'invention les faces 15 et les épaulements 18 sont contigüs en projection sur le plan médian M, comme l'illustre la ligne de jonction L, et peuvent même être formés à recouvrement partiel en projection sur le plan médian M, selon les besoins, dans un agencement assurant ainsi un alignement entre les forces d'action et de réaction exercées sur les zones d'extrémité du ressort lors de la rotation relative de l'arbre 1 par rapport à l'arbre 2, évitant de ce fait, conformément à l'objet de l'invention, les problèmes de mouvements d'adaptation du ressort en C lors de sa mise en oeuvre. Pour assurer un maintien axial des différents ressorts 9 du dispositif élastique de centrage et d'accouplement 8 on prévoira une ou deux épingles métalliques 22 fichées dans la paroi intérieure de la pièce de prolongement 7 au niveau de son extrémité libre.

Les ressorts en C 9 sont réalisés typiquement par estampage de flans métalliques, par exemple en acier et, afin que les ressorts présentent une réponse élastique sensiblement linéaire, la partie de corps 10 de chaque ressort présente avantageusement une épaisseur radiale évolutive augmentant depuis les zones d'extrémité 11 jusqu'à la portion centrale diamétralement opposée.

Quoique la présente invention ait été décrite en relation avec un mode de réalisation particulier, elle ne s'en trouve pas limitée mais est au contraire susceptible de modifications et de variantes qui apparaîtront à l'homme de l'art. En particulier, le dispositif élastique de centrage et d'accouplement à course morte selon l'invention peut trouver une utilisation dans d'autres domaines que les distributeurs hydrauliques, par exemple dans des dispositifs de détection de couple tels que décrits dans la demande de brevet espagnole Nº 541,703, au nom de la demanderesse.

## Revendications

1. Dispositif élastique de centrage et d'accouplement à course morte d'un premier (11) et d'un second (2, 4) organes rotatifs coaxiaux, le second organe rotatif ayant une partie (7) entourant une partie du premier organe rotatif, comprenant au moins un ressort en C (9) disposé sensiblement coaxialement entre lesdites parties de premier et second organes rotatifs et comportant deux zones d'extrémités adjacentes (11), sensiblement symétriques par rapport à un plan médian (M), reliées l'une à l'autre par une partie de corps partiellement annulaire (10), chaque zone d'extrémité (11) comportant une première (14) et une seconde (19) arêtes de butée coopérant normalement, en position centrée des premier et second organes rotatifs, chacune en butée respectivement avec une première (15) et une seconde (18) surfaces de butée solidaires respectivement desdites parties des premier et second organes rotatifs, les premières arêtes de butée (14) étant formées par des pattes d'extrémité (12) s'étendant sensiblement radialement vers l'intérieur et reçues dans une cavité externe (13) de ladite partie du premier organe rotatif (1), dont les faces en regard forment les première surfaces en butée (15), chaque seconde arête de butée (19) étant formée par un épaulement externe au niveau du raccordement entre la zone d'extrémité (11) et la partie de corps du ressort (10), ledit épaulement (19) étant décalé angulairement, de la première arête de butée (14) correspondante, caractérisé en ce que les secondes surfaces de butée (18) sont formées en vis à vis dans la paroi intérieure (16) de ladite partie (7) du second organe rotatif (2, 4) et en ce que, en position centrée des premier et second organes rotatifs, les première (15) et seconde (18) surfaces de butée pour chaque zone d'extrémité (11) du ressort en C (9) sont sensiblement contigües en projection sur le plan médian (M).

2. Dispositif selon la revendication 1, caractérisé en ce que les deux seconde surfaces de butée (18) sont symétriques par rapport au plan médian (M).

3. Dispositif selon l'une des revendications 1 et 2, caractérisé en ce que, en position centrée des premier et second organes rotatifs, les première (15) et seconde (18) surfaces de butée sont sensiblement parallèles au plan médian (M).

4. Dispositif selon l'une des revendications 1 à 3, caractérisé en ce que la paroi intérieure (16) de ladite partie (7) du second organe rotatif (2, 4) forme, en prolongement de chaque seconde surface de butée (18), une surface cylindrique (17) de rayon légèrement supérieur au rayon extérieur de la zone adjacente de la partie de corps (10) du ressort en C (9).

5. Dispositif selon l'une des revendications 1 à 4 caractérisé en ce que chaque zone d'extrémité (11) du ressort en C (9) comporte une surface interne cylindrique (20) de rayon légèrement supérieur au rayon d'une surface extérieure (21) de ladite partie du premier organe rotatif (1) voisine de la cavité (13).

6. Dispositif selon l'une des revendications 1 à 5, caractérisé en ce qu'il comporte plusieurs ressorts en C (9) axialement juxtaposés et placés alternativement en opposition, les seconde surfaces de butée (18) pour les différents ressorts étant mutuellement coplanaires.

7. Dispositif selon la revendication 6, caractérisé en ce que les ressorts en C juxtaposés sont maintenus en position par au moins un organe de verrouillage (22) monté dans ladite partie (7) du seconde organe rotatif (2, 4).

8. Dispositif selon la revendication 7, caractérisé en ce que l'organe de verrouillage (22) est constitué d'une épingle métallique rapportée dans ladite partie (7) du second organe rotatif (2, 4).

9. Dispositif selon l'une des revendications 1 à 8, caractérisé en ce que la partie de corps (10) du ressort en C (9) présente une épaisseur radiale évolutive.

## Claims

1. Resilient device for the centering and coupling with backlash of first (1) and second (2, 4) coaxial rotary components, the second rotary component having a part (7) surrounding a part of the first rotary component, said device being of the type comprising at least one C-spring (9) disposed substantially coaxially between said parts of the first and second rotary components and having two adjacent end zones (11) substantially symmetrical in relation to a median plane (M) and connected together by a partially annular body part (10), each end zone 11 comprising a first (14) and a second (19) stop edge, these stop edges normally, when the first and second rotary components are in the centered position, cooperating with and bearing against respective first (15) and second (18) stop surfaces fastened respectively to said parts of the first and second rotary components, the first stop edges (14) being formed by end lugs (12) extending substantially radially in the inward direction and received in an external cavity (13) which is formed in said part of the first rotary component (1) and whose mutually opposite faces form the first stop surfaces (15), each second stop edge (19) being fomed by an external shoulder at the connection between the end zone (11) and the body part (10) of the spring, said external shoulder (19) being angularly offset from the corresponding first stop edge (14), characterized in that the second stop surfaces (18) are formed face to face in the inside wall (16) of said part (7) of the second rotary component (2, 4), and in that in the centered position of the first and second rotary components the first (15) and second (18) stop surfaces for each end zone (11) of the C-spring (9) are substantially contiguous in projection onto the median plane (M).

2. Device according to Claim 1, characterized in that the two second stop surfaces (18) are symmetrical in relation to the median plane (M).

3. Device according to one of Claims 1 and 2, characterized in that in the centered position of the first and second rotary components the first (15) and second (18) stop surfaces are substantially parallel to the median plane (M).

4. Device according to one of Claims 1 to 3, characterized in that the inner wall (16) of said part (7) of the second rotary component (2, 43) forms in the extension of each second stop surface (18) a cylindrical surface (17) whose radius is slightly greater than the outside radius of the adjacent zone of the body part (10) of the C-spring (9).

5. Device according to one of Claims 1 to 4, characterized in that each end zone (113) of the C-spring (9) has an internal cylindrical surface (20) whose radius is slightly greater than the radius of an external surface (21) of said part of the said rotary component (1) which adjoins the cavity (13).

6. Device according to one of Claims 1 to 5, characterized in that it comprises a plurality of C-springs (9) axially juxtaposed and placed alternately in opposition, the second stop surfaces (18) for the different springs being mutually coplanar.

7. Device according to Claim 6, characterized in that the juxtaposed C-springs are held in position by at least one locking member (22) mounted in said part (7) of the second rotary component (2, 4).

8. Device according to Claim 7, characterized in that the locking member (22) is composed of a metal pin inserted into said part (7) of the second rotary component (2, 4).

9., Device according to one of Claims 1 to 8, characterized in that the body part (10) of the C-spring (9) has an evolutive radial thickness.

## Patentansprüche

1. Elastische Zentrier- und Totgangverbindung zwischen einem ersten Drehkörper (1) und einem zweiten Drehkörper (2, 4), die koaxial zueinander sind, wobei der zweite Drehkörper einen Abschnitt 7 hat, der einen Abschnitt der ersten Drehkörpers umgibt, mit mindestens einer C-förmigen Feder (9), die im wesentlichen koaxial zwischen den besagten Abschnitten des ersten und zweiten Drehkörpers angeordnet ist und zwei benachbarte Endbereiche (11) aufweist, die bezüglich einer Mittelebene (m) symmmetrisch und durch einen teilweise ringförmigen Körperabschnitt (10) miteinander verbunden sind, wobei jeder Endbereich (11) einen ersten (14) und einen zweiten (19) Anschlag aufweist, der normalerweise, in der zentrierten Stellung des ersten und zweiten Drehkörpers jeweils an einer ersten (15) bzw. einer zweiten (18) Anschlagfläche der besagten Abschnitte des ersten und zweiten Drehkörpers anliegt, wobei die ersten Anschläge (14) von endseitigen Ansätzen (12) gebildet sind, die sich im wesentlichen radial nach innen in eine äußere Ausnehmung (13) des besagten Abschnittes des ersten Drehkörpers (1) erstrecken und von dieser aufgenommen werden, wobei deren einander zugewandte Seiten die ersten Anschlagflächen (15) bilden, während jeder zweite Anschlag (19) von einer äußeren Schulter auf die Höhe des Übergangs zwischen dem Endbereich (11) und dem Körperabschnitt (10) der Federn gebildet wird und diese äußere Schulter (19) in Winkelrichtung gegenüber dem betreffenden ersten Anschlag (14) versetzt ist, dadurch gekennzeichnet, daß die zweiten Anschlagflächen (18) gegenüberliegend in der Innenwand (16) des besagten Abschnittes (7) des zweiten Drehkörpers (2, 4) gebildet sind und daß in der zentrierten Stellung des ersten und zweiten Drehkörpers die ersten (15) und zweiten (18) Anschlagflächen für jeden Endbereich (11) der C-förmigen Feder (9) bei einer Projektion auf die Mittelebene (M) im wesentlichen aneinander abgrenzen.

2. Vorrichtung nach Anspruch 1, dadurch gekennzeichnet, daß die beiden zweiten Anschlagflächen (18) bezüglich der Mittelebene (M) symmetrisch sind.

3. Vorrichtung nach Anspruch 1 oder 2, dadurch gekennzeichnet, daß in der zentrierten Stellung des ersten und zweiten Drehkörpers die ersten (15) und zweiten (18) Anschlagflächen im wesentlichen parallel zur Mittelebene (M) sind.

4. Vorrichtung nach einem der Ansprüche 1 bis 3, dadurch gekennzeichnet, daß die Innenwand (16) des besagten Abschnitts (7) des zweiten Drehkörpers (2, 4) in Verlängerung jeder zweiten Anschlagfläche (18) eine zylindrische Fläche (17) bildet, deren Radius geringfügig größer als der Außenradius des benachbarten Bereiches des Körperabschnittes (10) der C-förmigen Feder (9) ist.

5. Vorrichtung nach einem der Ansprüche 1 bis 4, dadurch gekennzeichnet, daß jeder Endbereich (11) der C-förmigen Feder (9) eine zylindrische Innenfläche (20) aufweist, deren Radius geringfügig größer als der Radius einer der Ausnehmung (13) benachbarten Außenfläche (21) des besagten Abschnittes des ersten Drehkörpers (1) ist.

6. Vorrichtung nach einem der Ansprüche 1 bis 5, dadurch gekennzeichnet, daß sie mehrere C-förmige Federn (9) aufweist, die axial nebeneinander und abwechselnd entgegengerichtet angeordnet sind, wobei die zweiten Anschlagflächen (18) für die verschiedenen Federn koplanar zueinander sind.

7. Vorrichtung nach Anspruch 6, dadurch gekennzeichnet, daß die nebeneinanderliegenden C-förmigen Federn durch mindestens ein Verriegelungsorgan (22) in ihrer Lage gehalten sind, welches in dem besagten Abschnitt (7) des zweiten Drehkörpers (2, 4) angebracht ist.

8. Vorrichtung nach Anspruch 7, gekennzeichnet, daß das Verriegelungsorgan (22) von einem Metallstift gebildet wird, der in den besagten Abschnitt (7) des zweiten Drehkörpers (2, 4) eingesetzt ist.

9. Vorrichtung nach einem der Ansprüche 1 bis 8, dadurch gekennzeichnet, daß der Körperabschnitt (10) der C-förmigen Feder (9) eine veränderliche radiale Dicke besitzt.

EP 0 290 698 B1

FIG.1

FIG.2